# EUROPÄISCHE PATENTSCHRIFT

(11) **EP 4 196 760 B1**
(45) Veröffentlichungstag und Bekanntmachung des Hinweises auf die Patenterteilung: **20.08.2025**
(21) Anmeldenummer: 21740513.3
(22) Anmeldetag: 08.07.2021
(51) Int. Cl.: G01M 3/20

(54) **SCHNÜFFELSONDE MIT BYPASS-ÖFFNUNG FÜR EINEN GASLECKSUCHER**
SNIFFER PROBE HAVING A BYPASS OPENING, FOR A GAS LEAK DETECTOR
SONDE DE RENIFLAGE COMPRENANT UNE OUVERTURE DE DÉRIVATION, POUR UN DÉTECTEUR DE FUITE DE GAZ

(30) Priorität: 17.08.2020 DE 102020210442
(43) Veröffentlichungstag der Anmeldung: 21.06.2023
(73) Patentinhaber: Inficon GmbH, 50968 Köln (DE)
(72) Erfinder: DECKER, Silvio, 50968 Köln (DE); WEISS, Sebastian, 50968 Köln (DE)
(74) Vertreter: dompatent von Kreisler Selting Werner - Partnerschaft von Patent- und Rechtsanwälten mbB
(86) Internationale Anmeldenummer: PCT/EP2021/069029
(87) Internationale Veröffentlichungsnummer: WO 2022/037845

(56) Entgegenhaltungen:
- WO-A1-2019/211378

## Beschreibung

Die Erfindung betrifft eine Schnüffelsonde für einen Gaslecksucher, der eine Vakuumpumpe zum Ansaugen von Gas durch die Schnüffelsonde nach dem Schnüffelprinzip und einen Gasdetektor zum Analysieren des angesaugten Gasstroms aufweist. Derartige Gaslecksucher werden auch als Schnüffel-Gaslecksucher bezeichnet. Die Vakuumpumpe ist dazu ausgelegt, Gas aus der Atmosphäre durch den Gaseinlass anzusaugen und dem Gasdetektor zuzuführen.

Hierzu weist die Schnüffelsonde den Gaseinlass für den angesaugten Gasstrom auf sowie einen mit dem Gaslecksucher verbindbaren Gasauslass, durch den das Gas dem Gaslecksucher und dem Gasdetektor zugeführt wird. Zudem weist die Schnüffelsonde einen Kanal auf, der den Gaseinlass mit dem Gasauslass gasleitend verbindet. Dabei kann die Schnüffelsonde integraler Bestandteil des Gaslecksuchers sein oder als separates Element lösbar mit dem Gaslecksucher verbindbar sein.

Je größer der durch den Gaseinlass angesaugte Schnüffelgasstrom, d.h. die Durchflussmenge, ist, desto schneller kann aus einem Leck des zu untersuchenden Prüflings ausgetretenes Gas erkannt werden und desto größer ist der Abstand zu einer möglichen Leckage, indem ausgetretenes Gas detektiert werden kann, weil umso mehr Gasvolumen pro Zeiteinheit zum Leckdetektor gefördert wird. Andererseits erschwert ein großer Gasfluss die genaue Lokalisierung von Leckagen, da aufgrund des großen angesaugten Gasvolumens der räumliche Bereich, aus dem das Gas angesaugt wird, umso größer ist. Je größer der Bereich, aus dem das untersuchte Gas angesaugt wird, desto grober oder ungenauer ist die Lokalisation eines Gaslecks.

Die Genauigkeit der Lokalisierung von Gaslecks kann durch Reduzieren des Schnüffelgasstroms erhöht werden. Dadurch wird jedoch auch die gemessene Konzentration des Leckagegases erhöht und am Lecksuchinstrument resultieren oftmals Druckänderungen.

WO2019/211378A1 offenbart einen Schnüffellecksucher.

Der Erfindung liegt die Aufgabe zugrunde, eine Schnüffelsonde zu schaffen, mit der eine schnelle Lecksuche auch bei größerem Abstand zum Gasleck ermöglicht und die Genauigkeit der Lokalisierung eines Lecks erhöht wird.

Die erfindungsgemäße Schnüffelsonde ist jeweils definiert durch die Merkmale der unabhängigen Patentansprüche 1 und 2.

Demnach sieht eine erste Variante der Erfindung vor, dass die Schnüffelsonde eine Bypass-Öffnung aufweist, die einen zwischen dem Gaseinlass und dem Gasauslass gelegenen Abschnitt des Kanals mit der äußeren Umgebung der Schnüffelsonde gasleitend verbindet, wobei die Bypass-Öffnung einen betätigbaren Verschluss zum selektiven Öffnen und Schließen der Bypass-Öffnung aufweist. Bei verschlossener Bypass-Öffnung ist der Durchfluss durch die Ansaugöffnung maximal, so dass ein großes Gasvolumen pro Zeiteinheit durch den Gaseinlass angesaugt wird. Dadurch wird ein großer Abstand zwischen Leckage und Gaseinlass ermöglicht, indem aus einem Leck austretendes Gas noch detektiert werden kann. Die Genauigkeit der Lokalisierung eines Gaslecks ist bei geschlossener Bypass-Öffnung jedoch reduziert und kann durch Öffnen der Bypass-Öffnung erhöht werden. Dadurch wird ein Anteil des dem Detektor zugeführten Gasstroms durch die Bypass-Öffnung angesaugt, während gegenüber dem Fall der verschlossenen Bypass-Öffnung nur noch ein geringerer Anteil des dem Detektor zugeführten Gasstroms durch den Gaseinlass angesogen wird. Wenn der Gaseinlass in Richtung eines Lecks geführt wird, ist das Volumen im Bereich des Lecks, aus dem mögliches Leckagegas angesaugt wird, gegenüber dem Fall der geschlossenen Bypass-Öffnung reduziert, wodurch die Genauigkeit, d.h. gewissermaßen die räumliche Auflösung, der Leckagedetektion erhöht ist.

Vorzugsweise sind die Bypass-Öffnung und/oder der den Gaseinlass mit dem Gasauslass verbindende Kanal derart dimensioniert und ausgebildet, dass der Gesamtfluss aus den Gasflüssen durch die Bypass-Öffnung und durch den Gaseinlass bei geöffneter Bypass-Öffnung im Wesentlichen dem Gasfluss durch den Gaseinlass bei verschlossener Bypass-Öffnung entspricht. Das heißt, der Gasfluss durch den Gasauslass entspricht bei geöffneter Bypass-Öffnung in etwa demjenigen bei geschlossener Bypass-Öffnung.

Alternativ zu der ersten Variante kann derselbe technische Effekt auch gemäß einer zweiten Variante dadurch erreicht werden, dass die Schnüffelsonde einen Bypass-Aufsatz aufweist, der einen Bypass-Gaseinlass, einen mit dem Gaseinlass der Schnüffelsonde verbindbaren Bypass-Gasauslass und einen den Bypass-Gaseinlass mit dem Bypass-Gasauslass gasleitend verbindenden Bypass-Kanal aufweist. Der Bypass-Aufsatz weist die Bypass-Öffnung auf, die einen zwischen dem Bypass-Gaseinlass und dem Bypass-Gasauslass gelegenen Abschnitt des Bypass-Kanals mit der äußeren Umgebung des Bypass-Aufsatzes gasleitend verbindet. Der Bypass-Aufsatz ist derart abnehmbar mit der Schnüffelsonde verbindbar, dass im verbundenen Zustand der Bypass-Gasauslass mit dem Gaseinlass der Schnüffelsonde gasleitend verbunden ist.

Bei der zweiten Variante ist der Abstand zwischen Gaseinlass bzw. Bypass-Gaseinlass und einem Leck, in dem aus einem Leck ausgetretenes Gas noch von dem Gasdetektor erkannt werden kann, maximal, wenn der Bypass-Aufsatz nicht mit der Schnüffelsonde verbunden ist. Die räumliche Auflösung der Detektion von Leckagegas, d.h. die Genauigkeit der Lokalisation eines Lecks, ist maximal, wenn der Bypass-Aufsatz auf die Schnüffelsonde aufgesetzt ist, so dass der Bypass-Gasauslass mit dem Gaseinlass der Schnüffelsonde verbunden ist.

Bei der zweiten Variante ist die Bypass-Öffnung und/oder der Bypass-Kanal bevorzugt derart dimensioniert und ausgebildet, dass der Gesamtfluss aus den Gasflüssen durch die Bypass-Öffnung und durch den Bypass-Gaseinlass bei mit der Schnüffelsonde verbundenem Bypass-Aufsatz im Wesentlichen dem Gasfluss durch den Gaseinlass der Schnüffelsonde bei abgenommenem Bypass-Aufsatz entspricht. Das heißt mit anderen Worten, dass der Gasfluss am Gasauslass der Schnüffelsonde bei aufgesetztem Bypass-Aufsatz mit geöffneter Bypass-Öffnung in etwa dem Gasfluss bei entferntem Bypass-Aufsatz entspricht und der Bypass-Aufsatz diesen Gasfluss nur vernachlässigbar beeinflusst. Bei beiden Varianten der Erfindung ist der Ausdruck "im Wesentlichen" dahingehend zu verstehen, dass sich der Gasfluss am Gasauslass der Schnüffelsonde bei Öffnen der Bypass-Öffnung und/oder bei Aufsetzen des Bypass-Aufsatzes nur um maximal etwa 5% oder maximal etwa 10% verändert. Dies kann beispielsweise auch durch eine geeignete, gegebenenfalls verstellbare Flussdrossel innerhalb des Kanals bzw. innerhalb des Bypass-Kanals erreicht werden. Oder der Fluss wird im Wesentlichen durch die Gasfluss drosselnde Wirkung der Kapillar-Leitung (flexibler Schlauch 26) zwischen Handgriff und einer Sensoreinheit mit Vakuumpumpe beeinflusst, sodass die Wirkung einer zusätzlichen Bypass-Öffnung auf den Gesamtfluss vernachlässigbar ist.

Bei beiden Varianten der Erfindung ist der dem Detektor zugeführte Anteil des Gasstromes, der aus dem Bereich eines Lecks angesogen wird, maximal, wenn die Bypass-Öffnung bei der ersten Variante verschlossen und der Bypass-Aufsatz bei der zweiten Variante nicht mit der Schnüffelsonde verbunden ist. In diesem Fall ist der Abstand zwischen Gaseinlass und Leck, in dem der Detektor aus dem Leck ausgetretenes Gas noch erkennen kann, maximal. Der Nutzer des Schnüffellecksuchers kann selektiv die räumliche Auflösung der Lokalisation eines Gaslecks erhöhen, indem bei der ersten Variante die Bypass-Öffnung geöffnet und bei der zweiten Variante der Bypass-Aufsatz mit der Schnüffelsonde verbunden wird.

Auch bei der zweiten Variante ist denkbar, dass die Bypass-Öffnung eines betätigbaren Verschluss zum selektiven Öffnen und Schließen der Bypass-Öffnung aufweist. Der Verschluss ist dann an dem Bypass-Aufsatz angeordnet.

Grundsätzlich kann der Verschluss als ein in Längsrichtung des Kanals bzw. des Bypass-Kanals entlang der Außenfläche der Schnüffelsonde bzw. des Bypass-Aufsatzes verschiebbarer Schieber ausgebildet sein. Der Schieber kann die Schnüffelsonde bzw. den Bypass-Aufsatz außen ringförmig oder als Ringabschnitt umgeben.

Vorteilhafterweise ist die Bypass-Öffnung in einer Ebene angeordnet, die quer zu der Hauptströmungsrichtung des angesaugten Gases in dem Kanal oder in dem Bypass-Kanal verläuft. Dadurch ist die Hauptströmungsrichtung, aus der Gas durch die Bypass-Öffnung angesaugt wird, eine andere als die Hauptströmungsrichtung, durch die Gas durch den Gaseinlass bzw. den Bypass-Gaseinlass angesogen wird. Dies bietet den Vorteil, dass durch die Bypass-Öffnung kein Gas aus dem Bereich des Lecks angesogen wird, wenn der Gaseinlass bzw. der Bypass-Gaseinlass in Richtung eines Lecks weist.

Dieser Effekt kann alternativ oder ergänzend auch dadurch erreicht werden, dass der Abstand der Bypass-Öffnung von dem Gaseinlass oder dem Bypass-Gaseinlass mindestens ca. 0,5 cm oder mindestens etwa 2 cm beträgt. Bei einem Beispiel der Erfindung kann dieser Abstand im Bereich zwischen 0,3 cm und 0,7 cm und bevorzugt im Bereich zwischen 0,4 cm und 0,6 cm liegen und damit etwa 0,5 cm betragen. Bei einem anderen Beispiel der Erfindung kann dieser Abstand im Bereich zwischen 1,8 cm und 2,2 cm und bevorzugt im Bereich zwischen 1,9 cm und 2,1 cm liegen und damit etwa 2 cm betragen. Bei noch einem anderen Beispiel kann dieser Abstand auch mehr als 2 cm betragen.

Alternativ oder ergänzend sollte hierzu auch die Bypass-Öffnung mit dem Kanal bzw. dem Bypass-Kanal über einen Gasleitungsweg verbunden sein, dessen Mittellängsachse zu der Mittellängsachse des Kanals bzw. des Bypass-Kanals einen Winkel von mindestens etwa 45° und vorzugsweise im Bereich zwischen 60° und 120° und besonders bevorzugt im Bereich zwischen 80° und 100° beträgt. Der Gasleitungsweg, der die Bypass-Öffnung mit dem Kanal bzw. mit dem Bypass-Kanal verbindet, ist dann in etwa quer zu dem Kanal bzw. dem Bypass-Kanal angeordnet. Auch dies bewirkt, dass durch die Bypass-Öffnung Gas aus einem anderen Bereich als durch den Gaseinlass bzw. den Bypass-Gaseinlass angesogen wird, damit durch die Bypass-Öffnung möglichst kein Leckagegas angesogen wird, wenn der Gaseinlass bzw. der Bypass-Gaseinlass in Richtung eines Lecks weist.

Bei einem Ausführungsbeispiel ist die Bypass-Öffnung derart dimensioniert, dass der Gasfluss durch die Bypass-Öffnung mindestens etwa fünfmal so groß ist wie der Gasfluss durch den Gaseinlass bei der ersten Variante der Erfindung bzw. durch den Gaseinlass bei der zweiten Variante der Erfindung.

Die Erfindung kann auch in einer Kombination aus einer Schnüffelsonde der beschriebenen Art und einem Gaslecksucher der beschriebenen Art gesehen werden.

Im Folgenden werden anhand der Figuren Ausführungsbeispiele der Erfindung näher erläutert. Es zeigen:
- Figur 1: ein erstes Ausführungsbeispiel mit verschlossener Bypass-Öffnung,
- Figur 2: das Ausführungsbeispiel gemäß Fig. 1 mit geöffneter Bypass-Öffnung,
- Figur 3: ein zweites Ausführungsbeispiel mit einem Bypass-Aufsatz im nicht verbundenen Zustand mit der Schnüffelsonde,
- Figur 4: ein drittes Ausführungsbeispiel mit einem mit der Schnüffelsonde verbundenen Bypass-Aufsatz und geöffneter Bypass-Öffnung und
- Figur 5: das Ausführungsbeispiel nach Fig. 4 mit verschlossener Bypass-Öffnung.

Bei sämtlichen Ausführungsbeispielen ist eine Schnüffelsonde 10 eines Gaslecksuchers mit einem Gaseinlass 12, einem Gasauslass 14 und einem den Gaseinlass 12 mit dem Gasauslass 14 gasleitend verbindenden Kanal 16 vorgesehen. Bei der erfindungsgemäßem Schnüffelsonde kann es sich um einen integralen Bestandteil eines Gaslecksuchers handeln, beispielsweise in dem die Schnüffelsonde über einen Schlauch mit dem Gaslecksucher verbunden ist. Alternativ kann es sich bei der Schnüffelsonde um ein von dem Gaslecksucher separates Element handeln, in dem die Schnüffelsonde lösbar mit dem Gaslecksucher verbunden werden kann.

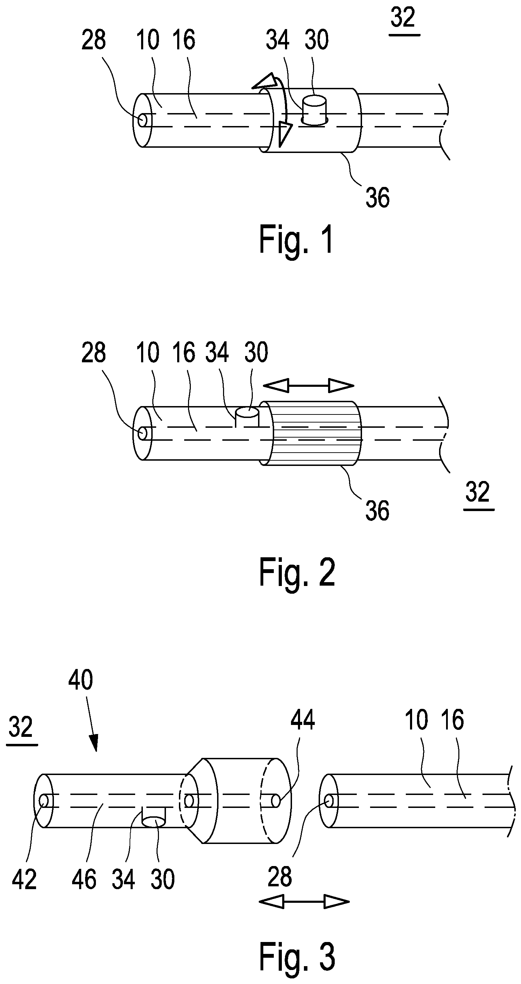

In den Figuren 3 - 5 ist der Gaslecksucher 18 beispielhaft dargestellt. Der Gaslecksucher 18 weist eine Vakuumpumpe 20 zum Ansaugen des Gases und einen Gasdetektor 22 zum Analysieren des angesaugten Gases auf. Der Gasdetektor 18 ist mit dem Gasauslass 26 der Schnüffelsonde 10 über einen flexiblen Schlauch 24 gasleitend verbunden.

Ein gasleitender Kanal 16 verbindet den Gasauslass 26 mit dem Gaseinlass 28 der Schnüffelsonde 10. Bei der Schnüffelsonde handelt es sich um ein langgestrecktes rotationssymmetrisches Element, bei dem der Gaseinlass 28 und der Gasauslass 26 an einander gegenüberliegenden stirnseitigen Enden angeordnet und durch den Kanal 16 gasleitend miteinander verbunden sind.

In dem ersten Ausführungsbeispiel gemäß den Figuren 1 und 2 ist die Schnüffelsonde 10 mit einer Bypass-Öffnung 30 versehen, die einen zwischen dem Gaseinlass 28 und dem Gasauslass 26 angeordneten Abschnitt des Kanals 16 mit der äußeren Umgebung 32 der Schnüffelsonde gasleitend verbindet, sofern die Bypass-Öffnung 30 wie in Fig. 2 dargestellt nicht verschlossen ist. Die Bypass-Öffnung 30 ist in einer Ebene angeordnet, die parallel zu der Mittellängsachse des Kanals 16 und parallel zu der Hauptströmungsrichtung des durch den Kanal 16 geförderten Gases verläuft. Zudem ist die Mittellängsachse des Gasleitungsweges 34, der die Bypass-Öffnung 30 mit dem Kanal 16 verbindet, quer zu der Mittellängsachse des Kanals 16 angeordnet. Dadurch wird bei geöffneter Bypass-Öffnung 30 durch die Bypass-Öffnung 30 Gas aus einem anderen Bereich angesogen als durch den Gaseinlass 28 der Schnüffelsonde 10.

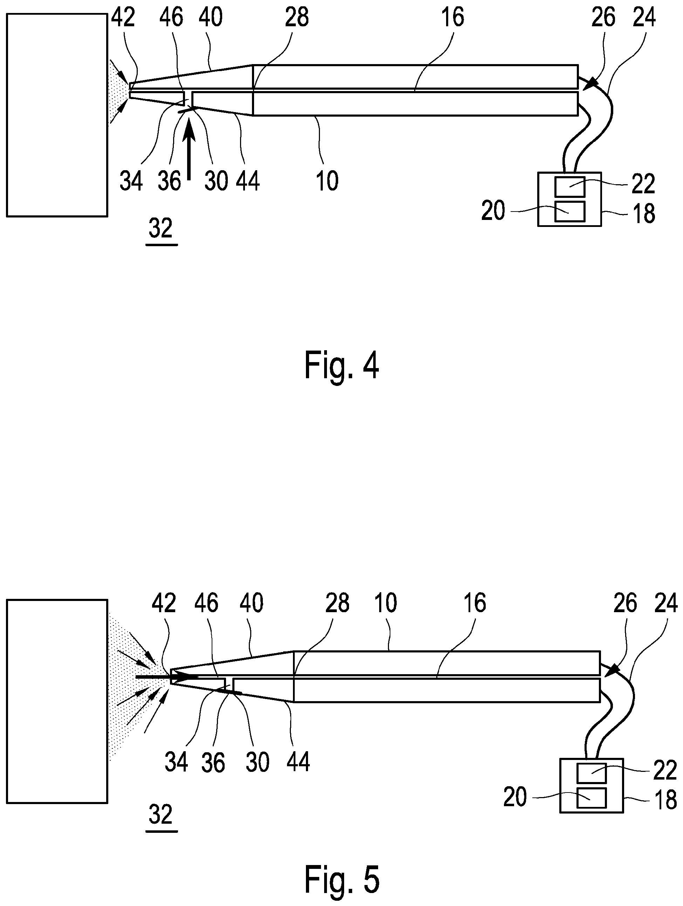

Bei dem ersten Ausführungsbeispiel ist die Bypass-Öffnung 30 über einen Schieber 36 verschließbar, der in Längsrichtung der Schnüffelsonde 10 und des Kanals 16 entlang der äußeren Mantelfläche der Schnüffelsonde 10 verschoben werden kann, um die Bypass-Öffnung 30 wie in Fig. 1 dargestellt zu verschließen und wie in Fig. 2 dargestellt freizugeben. Bei dem ersten Ausführungsbeispiel handelt es sich bei dem Verschluss 36 um einen ringförmigen Schieber, der die Schnüffelsonde außen ringförmig umgibt. Alternativ kann es sich bei dem Verschluss 36 um einen Ringabschnitt, um eine ebene Platte oder um eine Klappe handeln, ähnlich derjenigen in den Figuren 3 und 4.

Das zweite Ausführungsbeispiel gemäß Fig. 3 unterscheidet sich von dem ersten Ausführungsbeispiel dadurch, dass die Bypass-Öffnung 30 nicht an der Schnüffelsonde 10 vorgesehen ist, sondern an einem mit dem Gaseinlass 28 der Schnüffelsonde 10 verbindbaren Bypass-Aufsatz 40. Der Bypass-Aufsatz 40 weist einen Bypass-Gaseinlass 42 und einen Bypass-Gasauslass 44 sowie einen den Bypass-Gaseinlass 42 mit dem Bypass-Gasauslass 44 gasleitend verbindenden Bypass-Kanal 46 auf.

Der Bypass-Aufsatz 40 ist als Steckelement lösbar mit der Schnüffelsonde 10 verbindbar, indem der Bypass-Gasauslass 44 im verbundenen Zustand gasleitend mit dem Gaseinlass 28 der Schnüffelsonde 10 verbunden wird.

Bei dem zweiten Ausführungsbeispiel ist der Leitungsabschnitt 34 mit dem Bypass-Kanal 46 verbunden. Der Leitungsabschnitt 34 des zweiten Ausführungsbeispiels ist ebenfalls quer zu der Längsrichtung des Bypass-Kanals 46 angeordnet. Das bedeutet, dass die Mittellängsachse des Leitungsabschnitts 34 quer zu der Mittellängsachse des Bypass-Kanals 46 verläuft. Die Bypass-Öffnung 30 ist in einer Ebene angeordnet, die parallel zu der Hauptströmungsrichtung des angesaugten Gases in dem Bypass-Kanal 46 und parallel zu der Mittellängsachse des Bypass-Kanals 46 verläuft. In entsprechender Weise ist der Bypass-Gaseinlass in einer Ebene angeordnet, die quer zu der Ebene der Bypass-Öffnung 30 verläuft.

Das dritte Ausführungsbeispiel gemäß den Figuren 4 und 5 entspricht ähnlich wie das zweite Ausführungsbeispiel gemäß Fig. 3 der zweiten Variante der Erfindung mit dem Bypass-Aufsatz 40. Der wesentliche Unterschied des dritten Ausführungsbeispiels besteht gegenüber dem zweiten Ausführungsbeispiel darin, dass die Bypass-Öffnung 30 durch einen zusätzlichen Verschluss 36 in Form einer Klappe selektiv geöffnet und verschlossen werden kann, ähnlich dem Verschluss der ersten Variante der Erfindung.

## Patentansprüche

1. Schnüffelsonde (10) für einen Gaslecksucher (18), der eine Vakuumpumpe (20) zum Ansaugen von Gas durch die Schnüffelsonde nach dem Schnüffelprinzip und einen Gasdetektor (22) zum Analysieren des angesagten Gasstroms aufweist, wobei die Schnüffelsonde einen Gaseinlass (12) für den angesaugten Gasstrom, einen mit dem Gaslecksucher verbindbaren Gasauslass (14) und einen den Gaseinlass mit dem Gasauslass gasleitend verbindenden Kanal (16) aufweist,
**dadurch gekennzeichnet,**
**dass** die Schnüffelsonde eine Bypass-Öffnung (30) aufweist, die einen zwischen dem Gaseinlass (28) und dem Gasauslass (26) gelegenen Abschnitt des Kanals mit der äußeren Umgebung (32) der Schnüffelsonde gasleitend verbindet, wobei die Bypass-Öffnung einen betätigbaren Verschluss (36) zum selektiven Öffnen und Schließen der Bypass-Öffnung aufweist, um bei geöffneter Bypass-Öffnung einen Anteil des dem Gasdetektor zugeführten Gasstroms durch die Bypass-Öffnung anzusaugen.

2. Schnüffelsonde (10) für einen Gaslecksucher (18), der eine Vakuumpumpe (20) zum Ansaugen von Gas durch die Schnüffelsonde nach dem Schnüffelprinzip und einen Gasdetektor (22) zum Analysieren des angesagten Gasstroms aufweist, wobei die Schnüffelsonde einen Gaseinlass (28) für den angesaugten Gasstrom, einen mit dem Gaslecksucher verbindbaren Gasauslass (26) und einen den Gaseinlass mit dem Gasauslass gasleitend verbindenden Kanal (16) aufweist,
**dadurch gekennzeichnet,**
**dass** die Schnüffelsonde einen Bypass-Aufsatz (40) aufweist, der einen Bypass-Gaseinlass (42), einen mit dem Gaseinlass der Schnüffelsonde verbindbaren Bypass-Gasauslass (44) und einen den Bypass-Gaseinlass mit dem Bypass-Gasauslass gasleitend verbindenden Bypass-Kanal (46) aufweist,
wobei der Bypass-Aufsatz (40) eine Bypass-Öffnung (30) aufweist, die einen zwischen dem Bypass-Gaseinlass und dem Bypass-Gasauslass gelegenen Abschnitt des Bypass-Kanals mit der äußeren Umgebung (32) des Bypass-Aufsatzes gasleitend verbindet, und wobei der Bypass-Aufsatz derart abnehmbar mit der Schnüffelsonde verbindbar ist, dass im verbundenen Zustand der Bypass-Gasauslass mit dem Gaseinlass (28) der Schnüffelsonde gasleitend verbunden ist, um bei geöffneter Bypass-Öffnung einen Anteil des dem Gasdetektor zugeführten Gasstroms durch die Bypass-Öffnung anzusaugen.

3. Schnüffelsonde nach Anspruch 1, **dadurch gekennzeichnet, dass** die Bypass-Öffnung (30) und/oder der Kanal (16) derart dimensioniert sind, dass bei geöffneter Bypass-Öffnung (30) der Gesamtfluss aus den Gasflüssen durch die Bypass-Öffnung (30) und durch den Gaseinlass (28) im Wesentlichen dem Gasfluss durch den Gaseinlass (28) bei verschlossener Bypass-Öffnung (30) entspricht.

4. Schnüffelsonde nach Anspruch 2, **dadurch gekennzeichnet, dass** die Bypass-Öffnung (30) und/oder der Bypass-Kanal (46) derart dimensioniert ist, dass bei verbundenem Bypass-Aufsatz (40) der Gesamtfluss aus den Gasflüssen durch die Bypass-Öffnung (30) und durch den Gaseinlass (42) im Wesentlichen dem Gasfluss durch den Gaseinlass (28) bei abgenommenem Bypass-Aufsatz (40) entspricht.

5. Schnüffelsonde nach einem der vorhergehenden Ansprüche, **dadurch gekennzeichnet, dass** die Bypass-Öffnung (30) in einer Ebene angeordnet ist, die parallel zu der Hauptströmungsrichtung des angesaugten Gases in dem Kanal (16) oder in dem Bypass-Kanal (46) verläuft.

6. Schnüffelsonde nach einem der vorhergehenden Ansprüche, **dadurch gekennzeichnet, dass** der Verschluss (36) ein in Längsrichtung des Kanals entlang der Außenfläche der Schnüffelsonde oder des Bypass-Aufsatzes verschiebbarer Schieber ist.

7. Schnüffelsonde nach dem vorhergehenden Anspruch, **dadurch gekennzeichnet, dass** der Schieber die Schnüffelsonde oder den Bypass-Aufsatz außen ringförmig oder als Ringabschnitt umgibt.

8. Schnüffelsonde nach einem der vorhergehenden Ansprüche, **dadurch gekennzeichnet, dass** die Bypass-Öffnung in einem Abstand von ungefähr oder mindestens ca. 0,5 cm oder mindestens etwa 2 cm zu dem Gaseinlass oder zu dem Bypass-Gaseinlass angeordnet ist.

9. Schnüffelsonde nach einem der vorhergehenden Ansprüche, **dadurch gekennzeichnet, dass** die Bypass-Öffnung derart dimensioniert ist, dass der Gasfluss durch die Bypass-Öffnung mindestens etwa das fünf-fache des Gasflusses durch den Gaseinlass beträgt.

## Claims

1. A sniffer probe (10) for a gas leak detector (18), which gas leak detector has a vacuum pump (20) for drawing in gas through the sniffer probe in accordance with the sniffing principle and a gas detector (22) for analyzing the gas flow drawn in, the sniffer probe comprising a gas inlet (12) for the gas flow drawn in, a gas outlet (14), which can be connected to the gas leak detector, and a channel (16), which connects the gas inlet to the gas outlet in a gas conducting manner,
**characterized in that**
the sniffer probe has a bypass opening (30), which connects a section of the channel located between the gas inlet (28) and the gas outlet (26) to the outer environment (32) of the sniffer probe in a gas conducting manner, the bypass opening having an actuatable closure (36) for selectively opening and closing the bypass opening, such that when the bypass opening is open a portion of a gas flow supplied to the detector is drawn through the bypass opening.

2. A sniffer probe (10) for a gas leak detector (18), which gas leak detector has a vacuum pump (20) for drawing in gas through the sniffer probe in accordance with the sniffing principle and a gas detector (22) for analyzing the gas flow drawn in, the sniffer probe comprising a gas inlet (28) for the gas flow drawn in, a gas outlet (26), which can be connected to the gas leak detector, and a channel (16), which connects the gas inlet to the gas outlet in a gas conducting manner,
**characterized in that**
the sniffer probe comprises a bypass attachment (40) that comprises a bypass gas inlet (42), a bypass gas outlet (44) connectable to the gas inlet of the sniffer probe and a bypass channel (46) connecting the bypass gas inlet to the bypass gas outlet in a gas conducting manner,
the bypass attachment (40) comprising a bypass opening (30) which connects a section of the bypass channel located between the bypass gas inlet and the bypass gas outlet to the outer environment (32) of the bypass attachment in a gas conducting manner, and the bypass attachment being detachably connectable to the sniffer probe in such a manner that, in the connected state, the bypass gas outlet is connected to the gas inlet (28) of the sniffer probe in a gas conducting manner, such that when the bypass opening is open a portion of a gas flow supplied to the detector is drawn through the bypass opening.

3. The sniffer probe according to claim 1, **characterized in that** the bypass opening (30) and/or the channel (16) are dimensioned such that, when the bypass opening (30) is opened, the total flow of the gas flows through the bypass opening (30) and through the gas inlet (28) is essentially equal to the gas flow through the gas inlet (28) when the bypass opening (30) is closed.

4. The sniffer probe according to claim 2, **characterized in that** the bypass opening (30) and/or the bypass channel (46) is dimensioned such that, when the bypass attachment (40) is connected, the total flow of the gas flows through the bypass opening (30) and through the gas inlet (42) is essentially equal to the gas flow through the gas inlet (28) when the bypass attachment (40) is removed.

5. The sniffer probe according to any one of the preceding claims, **characterized in that** the bypass opening (30) is arranged in a plane that extends parallel to the main flow direction of the drawn gas in the channel (16) or in the bypass channel (46).

6. The sniffer probe according to any one of the preceding claims, **characterized in that** the closure (36) is a slider displaceable in the longitudinal direction of the channel along the outer surface of the sniffer probe or the bypass attachment.

7. The sniffer probe according to the preceding claims, **characterized in that** the slider surrounds the sniffer probe or the bypass attachment on the outside in an annular shape or as a ring section.

8. The sniffer probe according to any one of the preceding claims, **characterized in that** the bypass opening is arranged at a distance of approximately or at least about 0.5 cm or at least about 2 cm from the gas inlet or from the bypass gas inlet.

9. The sniffer probe according to any one of the preceding claims, **characterized in that** the bypass opening is dimensioned such that the gas flow through the bypass opening is at least approximately five times the gas flow through the gas inlet.

## Revendications

1. Sonde de reniflage (10) pour détecteur de fuite de gaz (18), qui présente une pompe à vide (20) permettant d'aspirer du gaz à travers la sonde de reniflage selon le principe du reniflage, et un détecteur de gaz (22) permettant d'analyser le flux de gaz aspiré, dans laquelle la sonde de reniflage présente une entrée de gaz (12) destinée au flux de gaz aspiré, une sortie de gaz (14) pouvant être reliée au détecteur de fuite de gaz et un canal (16) reliant l'entrée de gaz à la sortie de gaz de manière à guider le gaz,
**caractérisée en ce que**,
la sonde de reniflage présente un orifice de dérivation (30) qui relie, de manière à guider le gaz, un segment du canal situé entre l'entrée de gaz (28) et la sortie de gaz (26) à l'environnement extérieur (32) de la sonde de reniflage, l'orifice de dérivation présentant un obturateur (36) pouvant être actionné et permettant d'ouvrir et de fermer de manière sélective l'orifice de dérivation afin d'aspirer une partie du flux de gaz alimentant le détecteur de gaz par l'orifice de dérivation lorsque l'orifice de dérivation est ouvert.

2. Sonde de reniflage (10) pour détecteur de fuite de gaz (18), qui présente une pompe à vide (20) permettant d'aspirer du gaz à travers la sonde de reniflage selon le principe du reniflage et un détecteur de gaz (22) permettant d'analyser le flux de gaz aspiré, dans laquelle la sonde de reniflage présente une entrée de gaz (28) destinée au flux de gaz aspiré, une sortie de gaz (26) pouvant être reliée au détecteur de fuite de gaz et un canal (16) reliant l'entrée de gaz à la sortie de gaz de manière à guider le gaz, **caractérisée en ce que**,
la sonde de reniflage présente un embout de dérivation (40) qui présente une entrée de gaz de dérivation (42), une sortie de gaz de dérivation (44) pouvant être reliée à l'entrée de gaz de la sonde de reniflage et un canal de dérivation (46) reliant l'entrée de gaz de dérivation à la sortie de gaz de dérivation de manière à guider le gaz,
dans laquelle l'embout de dérivation (40) présente un orifice de dérivation (30) qui relie, de manière à guider le gaz, un segment du canal de dérivation situé entre l'entrée de gaz de dérivation et la sortie de gaz de dérivation à l'environnement extérieur (32) de l'embout de dérivation, et dans laquelle l'embout de dérivation peut être relié de manière amovible à la sonde de reniflage de façon telle que, à l'état relié, la sortie de gaz de dérivation est reliée, de manière à guider le gaz, à l'entrée de gaz (28) de la sonde de reniflage afin d'aspirer une partie du flux de gaz alimentant le détecteur de gaz par l'orifice de dérivation lorsque l'orifice de dérivation est ouvert.

3. Sonde de reniflage selon la revendication 1, **caractérisée en ce que** l'orifice de dérivation (30) et/ou le canal (16) sont dimensionnés de façon telle que, lorsque l'orifice de dérivation (30) est ouvert, le débit total des flux de gaz à travers l'orifice de dérivation (30) et à travers l'entrée de gaz (28) correspond essentiellement au débit de gaz à travers l'entrée de gaz (28) lorsque l'orifice de dérivation (30) est fermé.

4. Sonde de reniflage selon la revendication 2, **caractérisée en ce que** l'orifice de dérivation (30) et/ou le canal de dérivation (46) sont dimensionnés de façon telle que, lorsque l'embout de dérivation (40) est relié, le débit total des flux de gaz à travers l'orifice de dérivation (30) et à travers l'entrée de gaz (42) correspond essentiellement au débit de gaz à travers l'entrée de gaz (28) lorsque l'embout de dérivation (40) est retiré.

5. Sonde de reniflage selon l'une des revendications précédentes, **caractérisée en ce que** l'orifice de dérivation (30) est agencé dans un plan parallèle à la direction de circulation principale du gaz aspiré dans le canal (16) ou dans le canal de dérivation (46).

6. Sonde de reniflage selon l'une des revendications précédentes, **caractérisée en ce que** l'obturateur (36) est un coulisseau déplaçable dans la direction longitudinale du canal le long de la surface extérieure de la sonde de reniflage ou de l'embout de dérivation.

7. Sonde de reniflage selon la revendication précédente, **caractérisée en ce que** le coulisseau entoure la sonde de reniflage ou l'embout de dérivation à l'extérieur sous la forme d'un anneau ou d'un segment d'anneau.

8. Sonde de reniflage selon l'une des revendications précédentes, **caractérisée en ce que** l'orifice de dérivation est agencé à une distance d'environ ou d'au moins environ 0,5 cm ou d'au moins environ 2 cm par rapport à l'entrée de gaz ou à l'entrée de gaz de dérivation.

9. Sonde de reniflage selon l'une des revendications précédentes, **caractérisée en ce que** l'orifice de dérivation est dimensionnée de façon telle que le débit de gaz à travers l'orifice de dérivation est d'au moins environ cinq fois le débit de gaz à travers l'entrée de gaz.
